# EUROPEAN PATENT APPLICATION

(11) **EP 4 216 512 A1**
(43) Date of publication of application: **26.07.2023**
(21) Application number: 20953736.4
(22) Date of filing: 18.09.2020
(51) Int. Cl.: H04L 65/40, H04L 67/12, H04W 12/033, H04W 12/041, H04W 12/30

(54) **CONTROL METHOD, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: BAO, Yongming, Dongguan, Guangdong 523860 (CN); RU, Zhao, Dongguan, Guangdong 523860 (CN); LYU, Xiaoqiang, Dongguan, Guangdong 523860 (CN)
(74) Representative: RGTH
(86) International application number: PCT/CN2020/116316
(87) International publication number: WO 2022/056878

(57) **Abstract**

Provided are a control method, comprising: when establishing a first binding relationship with a first account number, a CHIP device meeting an original binding relationship release condition, releasing the first binding relationship, and establishing a second binding relationship with a second account number, such that a second configuration device using the second account configures the CHIP device. Further provided are another control method, a device, and a storage medium.

## Description

### TECHNICAL FIELD

The disclosure relates to Internet of Things (IoT) technology, in particular to a control method, a device and a storage medium. The device involved in the disclosure includes at least one of a Connected Home Over Internet Protocol (CHIP) device, a configuration device and a server.

### BACKGROUND

In related art, a CHIP device may only be configured by a configuration device which uses an account, that is, may only be bound with one account. Since only the configuration device which uses the bound account has the right to configure the CHIP device, when the CHIP device already had a binding relationship with an account, a configuration device using another account cannot configure the CHIP device.

### SUMMARY

Embodiments of the disclosure provide a control method, a device and a storage medium, to switch between configuration devices.

Solution of the embodiments of the disclosure is implemented as follows.

In a first aspect, an embodiment of the disclosure provides a control method, the method includes the following operation.

Responsive to that a Connected Home Over Internet Protocol (CHIP) device meets an original binding relationship release condition in a case that the CHIP device has established a first binding relationship with a first account, the CHIP device releases the first binding relationship and establishes a second binding relationship with a second account, to enable a second configuration device, which uses the second account, to configure the CHIP device.

In a second aspect, an embodiment of the disclosure provides a control method, the method includes the following operations.

An original binding relationship release request used for instructing release of a first binding relationship is received by a first configuration device. The first binding relationship is a binding relationship between a CHIP device and a first account used by the first configuration device.

The first binding relationship stored in the first configuration device is released by the first configuration device, to enable the CHIP device to establish a second binding relationship with a second account, and to enable a second configuration device, which uses the second account, to configure the CHIP device.

In a third aspect, an embodiment of the disclosure provides a control method, the method includes the following operations.

A network is configured for a CHIP device by a second configuration device.

The second configuration device sends an original binding relationship release instruction to the CHIP device in a case of determines that the CHIP device has established a first binding relationship with a first account. The original binding relationship release instruction is used for instructing the CHIP device to release the first binding relationship and establish a second binding relationship with a second account used by the second configuration device, to enable the second configuration device to configure the CHIP device

In a fourth aspect, an embodiment of the disclosure provides a control method, the method includes the following operations.

A Server receives an original binding relationship deletion request and deletes a first binding relationship between a CHIP device and a first account. The terminal device releases the first binding relationship and establishes a second binding relationship with a second account responsive to that the terminal device meets an original binding relationship release condition in a case that the terminal device has established the first binding relationship, to enable a second configuration device, which uses the second account, to configure the terminal device

In a fifth aspect, an embodiment of the disclosure provides a CHIP device, the CHIP device includes a release module.

The release module is configured to: responsive to that an original binding relationship release condition is met in a case that a first binding relationship has established with a first account, release the first binding relationship and establish a second binding relationship with a second account, to enable a second configuration device, which uses the second account, to configure the CHIP device.

In a sixth aspect, an embodiment of the disclosure provides a CHIP device, the CHIP device includes a second receiving module and an execution module.

The second receiving module is configured to receive an original binding relationship release request used for instructing release of a first binding relationship, wherein the first binding relationship is a binding relationship between a CHIP device and a first account used by the configuration device.

The execution module is configured to release the first binding relationship stored in the configuration device, to enable the CHIP device to establish a second binding relationship with a second account, and to enable a second configuration device, which uses the second account, to configure the CHIP device.

In a seventh aspect, an embodiment of the disclosure provides a configuration device, the configuration device includes a network configuration module and a third sending module.

The network configuration module is configured to configure a network for a CHIP device.

The third sending module is configured to send an original binding relationship release instruction to the CHIP device in a case of determining that the CHIP device already established a first binding relationship with a first account. The original binding relationship release instruction is used for instructing the CHIP device to release the first binding relationship and establish a second binding relationship with a second account used by the second configuration device, to enable the second configuration device to configure the CHIP device.

In an eighth aspect, an embodiment of the disclosure provides a server, the server includes a fourth receiving module and a deletion module.

The fourth receiving module is configured to receive an original binding relationship deletion request.

The deletion module is configured to delete a first binding relationship between a CHIP device and a first account. The terminal device releases the first binding relationship and establishes a second binding relationship with a second account responsive to that the terminal device meets an original binding relationship release condition in a case that the terminal device has established the first binding relationship, to enable a second configuration device, which uses the second account, to configure the terminal device.

In a ninth aspect, an embodiment of the disclosure provides a CHIP device, the CHIP device includes a processor and a memory for storing a computer program capable of being run on the processor. The processor is configured to, when running the computer program, execute steps of the above control method performed by the CHIP device.

In a tenth aspect, an embodiment of the disclosure provides a configuration device, the configuration device includes a processor and a memory for storing a computer program capable of being run on the processor. The processor is configured to, when running the computer program, execute steps of the above control method performed by the configuration device.

In an eleventh aspect, an embodiment of the disclosure provides a server, the server includes a processor and a memory for storing a computer program capable of being run on the processor. The processor is configured to, when running the computer program, execute steps of the above control method performed by the server.

In a twelfth aspect, an embodiment of the disclosure provides a storage medium having stored thereon an executable program which, when being executed by a processor, cause the processor to implement the above control method executed by a CHIP device.

In a thirteenth aspect, an embodiment of the disclosure provides a storage medium having stored thereon an executable program which, when being executed by a processor, cause the processor to implement the above control method executed by a configuration device.

In a fourteenth aspect, an embodiment of the disclosure provides a storage medium having stored thereon an executable program which, when being executed by a processor, cause the processor to implement the above control method executed by a server.

The control method according to the disclosure includes the following operations. Responsive to that a CHIP device meets an original binding relationship release condition in a case that the CHIP device has established a first binding relationship with a first account, the CHIP device releases the first binding relationship and establishes a second binding relationship with a second account, to enable a second configuration device, which uses the second account, to configure the CHIP device. Since the CHIP device releases the original binding relationship in an IoT system before establishing a binding relationship with a new account, establishment of a new binding relationship is ensured, so that the CHIP device can be configured by a new configuration device.

### BRIEF DESCRIPTION OF THE DRAWINGS

FIG. 1 is an optional flowchart of a CHIP device accessing a platform according to an embodiment of the disclosure.
FIG. 2 is an optional structural diagram of an IoT system according to an embodiment of the disclosure.
FIG. 3 is an optional structural diagram of an IoT system according to an embodiment of the disclosure.
FIG. 4 is an optional flowchart of a control method according to an embodiment of the disclosure.
FIG. 5 is an optional flowchart of a control method according to an embodiment of the disclosure.
FIG. 6 is an optional flowchart of a control method according to an embodiment of the disclosure.
FIG. 7 is an optional flowchart of a control method according to an embodiment of the disclosure.
FIG. 8 is an optional flowchart of a control method according to an embodiment of the disclosure.
FIG. 9 is an optional flowchart of a control method according to an embodiment of the disclosure.
FIG. 10 is an optional flowchart of a control method according to an embodiment of the disclosure.
FIG. 11 is an optional flowchart of a control method according to an embodiment of the disclosure.
FIG. 12 is an optional flowchart of a control method according to an embodiment of the disclosure.
FIG. 13 is an optional flowchart of a control method according to an embodiment of the disclosure.
FIG. 14 is an optional flowchart of a control method according to an embodiment of the disclosure.
FIG. 15 is an optional structural diagram of a CHIP device according to an embodiment of the disclosure.
FIG. 16 is an optional structural diagram of a configuration device according to an embodiment of the disclosure.
FIG. 17 is an optional structural diagram of a configuration device according to an embodiment of the disclosure.
FIG. 18 is an optional structural diagram of a server according to an embodiment of the disclosure.
FIG. 19 is an optional structural diagram of an electronic device according to an embodiment of the disclosure.

### DETAILED DESCRIPTION

In order to make the purpose, technical solution and advantages of the disclosure more clear, the disclosure will be further described in detail below in combination with the accompanying figures. The described embodiments should not be regarded as limitation on the disclosure. All other embodiments obtained by a person of ordinary skill in the art based on the embodiments of the disclosure without paying efforts shall fall within the protection scope of the disclosure.

Before detailed description of the control method according to embodiments of the disclosure, binding of a CHIP device and a configuration device is briefly described.

In IoT, a platform allocates an operation identifier for a CHIP device and establishes an association relationship between the allocated operation identifier and an account to be bound, thereby establishing a binding relationship between the CHIP device and the account, to bind the CHIP device with the account, and to ensure safe communication between the CHIP device and a configuration device which uses the account. One CHIP device may only bind one account at a time, and the CHIP device may only be configured by the configuration device which uses the bound account. Binding of the CHIP device and the account are performed during the CHIP device accessing the platform.

In an embodiment of the disclosure, the platform is an information process system run on a server, and different platforms may be independent from each other. A CHIP device may run applications (APPs) of different vendors, and the platform of a vender may only support access of an application of this vendor. Alternatively, the platform is a cloud platform of ecology cloud.

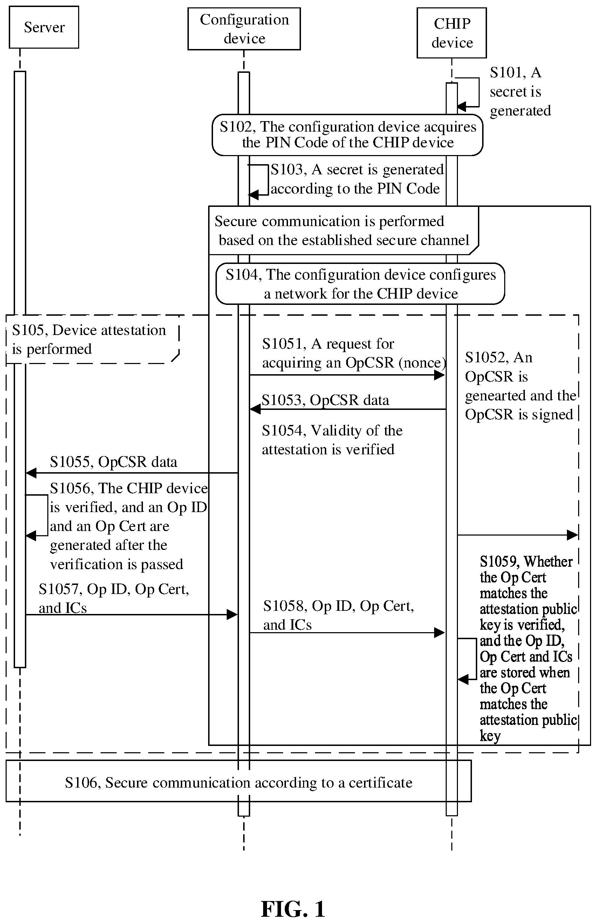

The method for a CHIP device accessing a platform is illustrated in FIG. 1, the method includes the following operations.

S101, a secret is generated by a CHIP device.

The CHIP device calculates a Personal Identification Number Code (PIN Code) according to a secret derivation algorithm to generate a secret, and stores the generated secret in the CHIP device before the CHIP device is shipped.

Herein, the secret derivation algorithm may be a Password-Based Key Derivation Function (PBKDF).

S102, the PIN Code of the CHIP device is acquired by a configuration device.

Herein, when a user obtains the CHIP device, the user may scan the two-dimensional code on the CHIP device by using an APP on the configuration device, to acquire the PIN Code of the CHIP device. When the CHIP device does not have a two-dimensional code, the user may also manually input the PIN Code in the configuration device. The APP in the configuration device plays a role of a configurator of the CHIP device.

S103, a secret is generated by the configuration device according to the PIN Code.

The configuration device performs a calculation on the PIN Code through the secret derivation algorithm to generate the secret.

After generating the secret, the configuration device encrypts data used to communicate with the CHIP device through the Password-based Authentication Key Exchange (PAKE) algorithm according to the generated secret. The CHIP device side checks the data through the PAKE according to the secret, thereby establishing a secure channel between the configuration device and the CHIP device for secure communication.

In below operations S104 to S105, secure communications are performed based on the established secure channel.

S104, a network is configured for the CHIP device by the configuration device.

On the basis that the secure channel is established, the configuration device sends the Service Set Identifier (SSID) and a password of an Access Point (AP), to which the configuration device is accessed, to the CHIP device. The CHIP device successfully connects to the AP through the received SSID and the password. The AP allocates information such as an Internet Protocol (IP) address for the connected CHIP device, so that the CHIP device accesses the AP and accesses the platform on the network side through the AP.

S105, the CHIP device performs device attestation after the network is successfully configured.

S106, after the device attestation is successful, the CHIP device securely communicates with the configuration device according to a certificate.

The operation S105 includes the following actions.

S1051, the configuration device sends a request for acquiring an Operation Certificate Signing Request (OpCSR) to the CHIP device.

The request sent by the configuration device carries a nonce.

S1052, the CHIP device generates an OpCSR and signs the OpCSR.

The CHIP device generates an Operation Key Pair (Op Key Pair) including an Operation Public Key (Op Public Key) and an Operation Private Key (Op Private Key), and forms the OpCSR. The OpCSR includes the operation public key of the CHIP device, the nonce sent from the configuration device and information of the CHIP device that needs to be authenticated. The information of the CHIP device that needs to be authenticated includes: a Product Attestation (PA) certificate of the device, a PA intermediate certificate and a device attestation block, an attestation public key is carried in the PA certificate.

After generating the OpCSR, the CHIP device signs the OpCSR for the first time by using the Op Private Key of the CHIP device, and then signs the signed OpCSR for the second time by using the Attestation Private Key (Att Private Key) of the CHIP device.

S1053, the CHIP device returns OpCSR data to a mobile phone.

After finishing signing, the CHIP device sends the OpCSR and data of the signed OpCSR to the configuration device. Herein, the OpCSR and the data of the signed OpCSR are referred to as OpCSR data.

S1054, the configuration device verifies validity of the attestation.

After acquiring the OpCSR data, the configuration device verifies the validity of the attestation through the attestation public key stored in the PA certificate of the CHIP device. The operation S 1054 is optional.

S1055, the configuration device sends the OpCSR data to the server.

The configuration device sends the OpCSR and the data of the signed OpCSR to an implementation server. A platform to which the APP of the configuration device belongs is run on the server. Herein, the platform may be a cloud platform, that is, an ecology cloud.

S1056, the server verifies the CHIP device, and generates an operation identifier (Op ID) and an operation certificate (Op Cert) after the verification is passed.

The server verifies whether the CHIP device holds the Op Private Key through the Op Public Key, to perform operation verification on the CHIP device. The server generates the Op ID and the Op Cert for the CHIP device after the operation verification is successful.

At S1056, the server may also verify the validity of attestation through the attestation public key. It is noted that if the configuration device side verifies the attestation validity, the server side does not verify the attestation validity. If the configuration device side does not verify the attestation validity, the server side may verify the attestation validity.

At S1056, after generating the Op ID for the CHIP device, the server establishes an association relationship between the Op ID and an account used by the configuration device, thereby binding the CHIP device with the account used by the configuration device. The Op ID is used by the platform for identifying the CHIP device. The account used by the configuration device is used for the configuration device to access the account on the platform run by the server.

S1057, the server returns the Op ID, Op Cert, and Operation Intermediate Certificate(s) (ICs) to the configuration device.

S1058, the configuration device sends the Op ID, Op Cert and ICs to the CHIP device.

S1059, the CHIP device verifies whether the Op Cert matches the attestation public key, and stores Op ID, Op Cert and ICs when the Op Cert matches the attestation public key.

The CHIP device verifies the Op Cert by using the Att Private Key.

The configuration device illustrated in FIG. 1 may be a terminal capable of configuring the CHIP device, such as a mobile terminal.

The CHIP device is an IoT device that may access a home network based on an IP address and implement some basic functions, such as a switch, a door lock, a refrigerator and so on.

In the above solution, after binding with the account of the current configuration device, the CHIP device may only be configured by the configuration device and may access the network based on the configuration device, and may not be configured by a configuration device using another account, or may not access the network based on another configuration device.

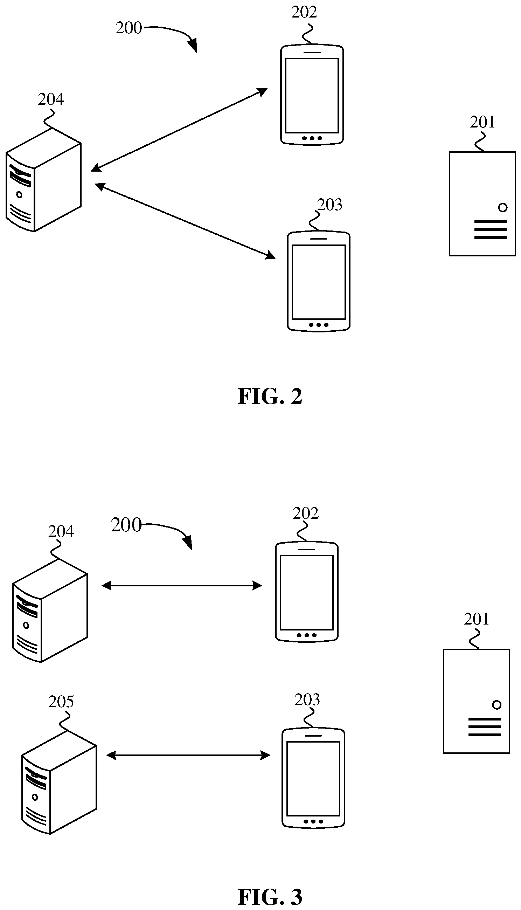

Based on the above problem, the disclosure provides a control method. The control method in embodiments of the disclosure may be applied to the IoT System 200 illustrated in FIG. 2 or FIG. 3. The IoT system 200 includes a CHIP device 201, a configuration device 202, and a configuration device 203. The configuration device 202 uses a first account, and the configuration device 203 uses a second account. The first account is an account on a first platform, and the second account is an account on a second platform.

In an example, as illustrated in FIG. 2, the first platform and the second platform are the same platform and the platform is run on a Server 204.

In an example, as illustrated in FIG. 3, the first platform and the second platform are different platforms, the first platform is run on the server 204 and the second platform is run on a server 205.

When the CHIP device 201 is bound with the first account, the configuration device 202 which uses the first account may configure the CHIP device 201, and the CHIP device 201 interacts with the first platform based on the configuration device 202.

When the CHIP device 201 is bound with the second account, the configuration device 203 which uses the second account may configure the CHIP device 201, and the CHIP device 201 interacts with the second platform based on the configuration device 203.

The CHIP device 201 and the configuration device 202 or the configuration device 203 may be an access terminal, user equipment (UE), a subscriber unit, a subscriber station, a mobile station, a mobile console, a remote station, a remote terminal, a mobile device, a user terminal, a terminal, a wireless communication device, a user agent, or user apparatus. The access terminal may be a cellular phone, a cordless phone, a session initiation protocol (SIP) phone, a wireless local loop (WLL) station, a personal digital assistant (PDA), a handheld device having a wireless communication function, a computing device, another processing device connected to a wireless modem, an in-vehicle device, a wearable device, a CHIP device in a 5G network, a device in a future evolved PLMN or the like.

FIG. 2 exemplarily illustrates two configuration devices and one platform, and FIG. 3 exemplarily illustrates two configuration devices and two platforms. Alternatively, the IoT System 200 may include more than two configuration devices and more than two platforms, there are no limits made thereto in the embodiments of the disclosure, and the number of accounts on one platform is not limited herein.

The CHIP device illustrated in FIG. 2 or FIG. 3 may also include an IoT device such as a sensor, a laser scanning system and a smart appliance.

The server illustrated in FIG. 2 or FIG. 3 may be an independent computer device or a server cluster composed of multiple computer devices.

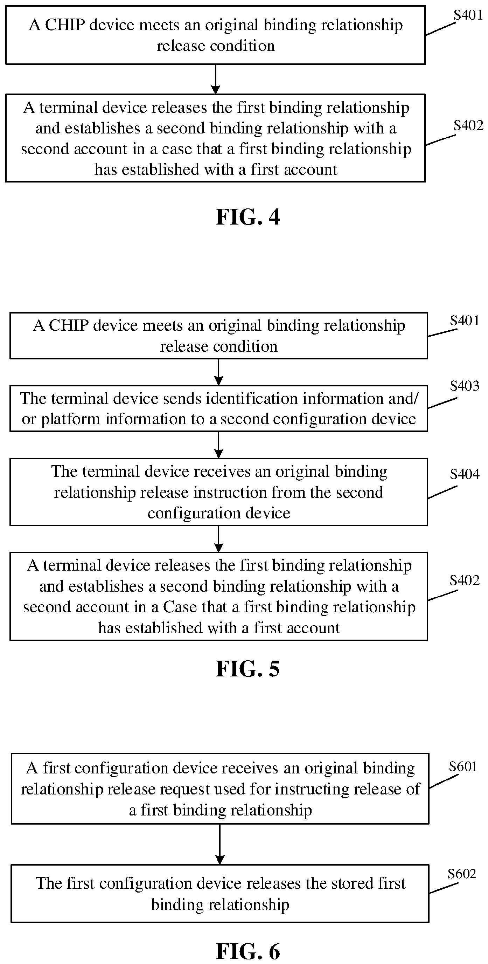

As illustrated in FIG. 4, a possible processing flow of the control method according to the embodiment of the disclosure includes the following operations.

S401, a CHIP device meets an original binding relationship release condition in a case that the CHIP device has established a first binding relationship with a first account.

In an embodiment of the disclosure, the CHIP device has stored an operation identifier generated by a first platform to which the first account belongs, and the operation identifier has an association relationship with the first account, that is, the CHIP device has established the first binding relationship with the first account.

Alternatively, CHIP device meets the original binding relationship release condition when detecting at least one of the following events.

A first event: network configuration by a second configuration device is completed.

A second event: an instruction used for instructing factory reset is received.

In an example in which the first event is detected by the CHIP device, the first event is detected by the CHIP device in a first scenario in which the network is configured for the CHIP device by the second device.

In the first scenario, in the case that the CHIP device has established a binding relationship with the first account, the CHIP device establishes a secure channel with the second configuration device, and is configured with the network by the second configuration device based on the established secure channel, to access the network.

Herein, after the second configuration device acquires a PIN code of the CHIP device and generates a secret required for secure channel with the CHIP device based on the PIN code, and then configures the network for the CHIP device. On the basis that the secure channel is established, the second configuration device sends an SSID and a password of an accessed AP to the CHIP. The CHIP device successfully connects to the AP according to the received SSID and password. The AP allocates information such as an IP address for the connected CHIP device, so that the CHIP device accesses the AP and accesses the platform on the network side through the AP.

Herein, a manner in which the second configuration device acquires the PIN code of the CHIP device may include one of the following manners.

A first manner: a two-dimensional code on the CHIP device is scanned. The information carried by the two-dimensional code on the CHIP device includes the PIN code of the CHIP device.

A second manner: an input operation is received from a user. Input content of the user's input operation is the PIN code of the CHIP device.

In an example in which the second event is detected by the CHIP device, the CHIP device detects the second event in a second scenario in which factory reset is performed.

In an example, the CHIP device receives an instruction used for instructing factory reset according to the factory reset operation input by the user. In an example, the CHIP device receives the instruction used for instructing factory reset from a first configuration device which uses a first account.

S402, the CHIP device releases the first binding relationship and establishes a second binding relationship with a second account.

Responsive to that a CHIP device meets an original binding relationship release condition in a case that the CHIP device has established a first binding relationship with a first account, the CHIP device releases the first binding relationship, and establishes a new binding relationship, i.e. the second binding relationship, with the second account used by the second configuration device.

For example, in a case that the CHIP device has established a binding relationship with an account A used by a configuration device A, the CHIP device releases the binding relationship with the account A and establishes the binding relationship with an account B when the CHIP device is configured with a network by a configuration device B which uses the account B.

Alternatively, the first account and the second account are accounts on different platforms.

Alternatively, the first account and the second account are accounts on a same platform.

In an embodiment of the disclosure, the operation that the CHIP device releases the relationship with the first account includes an operation that the CHIP device deletes the stored first binding relationship and instructs the first platform and/or the first configuration device which use the first account to release the stored first binding relationship. The sequence that the CHIP device deletes the stored first binding relationship and instructs the first configuration device and/or the first platform to release the stored first binding relationship is not limited herein.

Alternatively, the CHIP device instructs the first configuration device and/or the first platform to release the stored first binding relationship after the CHIP device deletes the stored first binding relationship. Alternatively, the CHIP device deletes the stored first binding relationship after the CHIP device instructs the first configuration device and/or the first platform to release the stored first binding relationship.

Alternatively, the operation that the CHIP device instructs the first configuration device and/or the first platform to release the first binding relationship includes an operation that the CHIP device sends an original binding relationship release request to the first configuration device and/or a first server, where the first platform is run on the first server. Alternatively, the CHIP device sends the original binding relationship release request to the first configuration device. Alternatively, the CHIP device sends the original binding relationship release request to the first server, and the first server forwards the original binding relationship release request to the first configuration device. Alternatively, the CHIP device sends the original binding relationship release request to the first configuration device and the first server.

In an embodiment of the disclosure, the operation identifier of the CHIP device and the first account are carried in the original binding relationship release request, to instruct release of the association relationship between the operation identifier and the first account, thereby releasing the first binding relationship between the CHIP device and the first account.

The CHIP device establishes the second binding relationship with the second account after releasing the first binding relationship, to enable the second configuration device to configure the CHIP device. The CHIP device implements the establishment of the second binding relationship during the device attestation process with the second configuration device.

In the first scenario, when the CHIP device receives the instruction used for instructing factory reset in a network connected state, the CHIP device releases the stored first binding relationship. When the CHIP device receives the instruction used for instructing factory reset in a network disconnected state, the CHIP device switches from the network disconnected state to the network connected state by using the SSID and the password sent from the first configuration device, and releases the stored first binding relationship in the network connected state.

The CHIP device restores the factory settings after releasing the first binding relationship, and establishes the secure channel with the second configuration device after the factory settings are restored. After establishing the secure channel with the second configuration device, the CHIP device is configured with the network by the second configuration device and performs the device attestation with the second configuration device.

In an embodiment of the disclosure, in the second scenario, as illustrated in FIG. 5, the method includes the following operations before the operation S402.

S403, the CHIP device sends identification information and/or platform information to the second configuration device.

The identification information is used to characterize the CHIP device. Alternatively, the identification information includes an operation identifier, device information, and the like. The platform information is used to characterize the platform to which the first account belongs. Alternatively, the platform information includes a platform identifier for uniquely identifying the platform, status information of the platform, information associated with the CHIP device, and the like. The information associated with the CHIP device includes account information, Op Cert, ICs, and the like.

When receiving the identification information and/or the platform information from the CHIP device, the second configuration device detects whether the account bound with the CHIP device is the second account according to the received identification information and/or the platform information. The second configuration device determines that the account bound with the CHIP device is not the second account and considers that the CHIP device has established a binding relationship, in a case that the second configuration device has not stored thereon the operation identifier or the account information in the platform information.

The second configuration device sends an original binding relationship release instruction to the CHIP device when the second configuration device determines that the account bound with the CHIP device is not the second account, to instruct the CHIP device to release the established binding relationship, i.e., the first binding relationship and to establish a second binding relationship with the second account.

S404, the CHIP device receives the original binding relationship release instruction from the second configuration device.

The operation S402 includes S4021 in which the CHIP device releases the first binding relationship and establishes the second binding relationship with the second account when the CHIP device receives the original binding relationship release instruction.

In an embodiment of the disclosure, an implementation of releasing the first binding relationship in S402 includes one of the following two implementations.

A first implementation: the original binding relationship release request is sent to the first server; and an original binding relationship release success response is received from the first server. The first platform to which the first account belongs is run on the first server.

A second implementation: the original binding relationship release request is sent to the first configuration device which uses the first account; and an original binding relationship release success response is received from the first configuration device.

In an example in which the implementation of S402 is the first implementation, the CHIP device sends the original binding relationship release request to the first server to instruct the first platform to delete the first binding relationship, and the first server instructs the first configuration device to release the stored first binding relationship.

Alternatively, the first server forwards the original binding relationship release request to the first configuration device after receiving the original binding relationship release request, to instruct the first configuration device to release the stored first binding relationship. The first configuration device releases the stored first binding relationship in a case that the original binding relationship release request is received, then returns an original binding relationship deletion request to the first server, to instruct the first server to release the stored first binding relationship. The first server deletes the first binding relationship in a case that the original binding relationship deletion request is received, then returns the original binding relationship release success response to the first configuration device, to indicate that the first binding relationship has been released from the first configuration device and the first binding relationship has been deleted from the first server, thereby completing the release of the first binding relationship in the IoT system.

In an example in which the implementation of S402 is the second implementation, the CHIP device sends the original binding relationship release request to the first configuration device to instruct the first configuration device to release the stored first binding relationship, and the first configuration device instructs the first platform to delete the first binding relationship.

Alternatively, after the first configuration device receives the original binding relationship release request, the first configuration device releases the stored first binding relationship in a case that the first configuration device receives the original binding relationship release request, then returns the original binding relationship deletion request to the first server to instruct the first server to release the stored first binding relationship. The first server deletes the first binding relationship in a case that the original binding relationship release request is received, then returns the original binding relationship release success response to the CHIP device, to indicate that the first binding relationship has been released from the first configuration device and the first binding relationship has been deleted from the first server, thereby completing the release of the first binding relationship in the IoT system.

In an embodiment of the disclosure, in the second scenario, after the CHIP device receives the original binding relationship release success response, the CHIP device sends an original binding relationship release success notification to the second configuration device.

The CHIP device sends the original binding relationship release success notification to the second configuration device after determining that the first binding relationship is released in the IoT system, to notify the second configuration device that the release of the first binding relationship has been completed. The second configuration device performs the device attestation with the CHIP device when receiving the original binding relationship release success notification. During the attestation process between the CHIP device and the second configuration device, the second configuration device configures the CHIP device with a new operation identifier by using a second platform to which the second account belongs to and establishes an association relationship between the new operation identifier and the second account, so as to establish a binding relationship (i.e., the second binding relationship) between the CHIP device and the second account.

In an embodiment of the disclosure, the first binding relationship may be carried in the original binding relationship release request, the original binding relationship release instruction, the original binding relationship deletion request, the original binding relationship release success response and/or the original binding relationship release success notification.

As illustrated in FIG. 6, a possible processing flow of the control method according to an embodiment of the disclosure includes the following operations.

S601, a first configuration device receives an original binding relationship release request used for instructing release of a first binding relationship.

The first binding relationship is a binding relationship between a CHIP device and a first account used by the first configuration device.

The CHIP device meets an original binding relationship release condition in a case that the CHIP device has established a first binding relationship with a first account, then the first binding relationship is required to be released. The CHIP device deletes the stored first binding relationship and instructs the first configuration device and/or the first platform to release the first binding relationship.

In an embodiment of the disclosure, the original binding relationship release request is received from the CHIP device or a first server.

The operation that the CHIP device instructs the first configuration device and/or the first platform to release the first binding relationship includes an operation that the CHIP device sends the original binding relationship release request to the first configuration device and/or the first server, where he first platform to which the first account belongs is run on the first server.

Alternatively, when the CHIP device sends the original binding relationship release request to the first configuration device, the first configuration device receives the original binding relationship release request from the CHIP device.

Alternatively, when the CHIP device sends the original binding relationship release request to the first server and the first server forwards the original binding relationship release request to the first configuration device, the first configuration device receives the original binding relationship release request from the first server.

S602, the first configuration device releases the stored first binding relationship.

The first configuration device releases the stored first binding relationship stored, to enable the CHIP device to establish a second binding relationship with a second account, to enable a second configuration device, which uses the second account, to configure the CHIP device.

The first configuration device cancels the association relationship between a stored operation identifier and the first account, to complete the release of the stored first binding relationship. The operation identifier in the first binding relationship is the operation identifier configured by the first server for the CHIP device.

In an embodiment of the disclosure, the first configuration device may output a first binding relationship release prompt before releasing the stored first binding relationship. The first configuration device obtains the user's authorization upon receiving the determination operation for the first binding relationship release prompt from the user, and releases the stored first binding relationship upon receiving the user's authorization.

In an embodiment of the disclosure, after the operation S602, the disclosure further includes the following operation. The original binding relationship deletion request is sent to the first server to which the first account belongs when the stored first binding relationship is released. The original binding relationship deletion request is used for instructing the first server to delete the first binding relationship.

The first configuration device sends the original binding relationship deletion request to the first server after releasing the stored first binding relationship, to instruct the first server to delete the stored first binding relationship.

Alternatively, in a case that the first configuration device receives the original binding relationship release request from the first server, the first server returns an original binding relationship release success response to the CHIP device after deleting the first binding relationship.

Alternatively, in a case that the first configuration device receives the original binding relationship release request from the CHIP device, the first server returns the original binding relationship release success response to the first configuration device after deleting the first binding relationship, and the first configuration device forwards the original binding relationship release success response to the CHIP device.

Alternatively, the first account and the second account are accounts on different platforms. In this case, the first account is an account on the first platform, the second account is an account on the second platform, and the first server on which the first platform is run and the second server on which the second account are run are different servers.

Alternatively, the first account and the second account are accounts on a same platform. In this case, the first account is an account on the first platform, the second account is an account on the second platform, and the first server on which the first platform is run and the second server on which the second account is run are a same server.

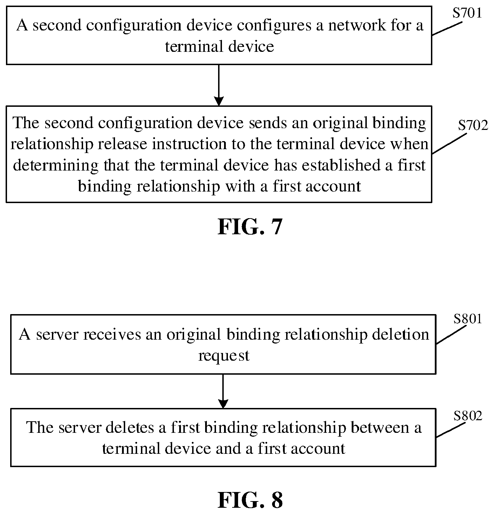

As illustrated in FIG. 7, a possible processing flow of the control method according to an embodiment of the disclosure includes the following operations.

S701, a network is configured for a CHIP device by a second configuration device.

S702, the second configuration device sends an original binding relationship release instruction to the CHIP device when determining that the CHIP device has established a first binding relationship with a first account.

The original binding relationship release instruction is used for instructing the CHIP device to release the first binding relationship and establish a second binding relationship with a second account used by the second configuration device, to enable the second configuration device to configure the CHIP device.

In an embodiment of the disclosure, before the operation S701, the second configuration device receives identification information and/or platform information from the CHIP device. The identification information and/or the platform information are used for detecting whether the CHIP device has established the first binding relationship.

The platform information is used to characterize the platform to which the first account belongs. Alternatively, the platform information includes a platform identifier for uniquely identifying the platform, status information of the platform, information associated with an operation identifier, and the like. The information associated with the operation identifier includes account information, Op Cert, ICs, and the like. Optionally, the account information includes the first account.

When receiving the identification information and/or the platform information from the CHIP device, the second configuration device determines whether the account bound with the CHIP device is the second account according to the received identification information and/or the platform information. The second configuration device determines that the account bound with the CHIP device is not the second account and considers that the CHIP device has established a binding relationship, in a case that the second configuration device has not stored thereon the received operation identifier or the account information in the platform information.

The second configuration device sends an original binding relationship release instruction to the CHIP device when the second configuration device determines that the account bound by the CHIP device is not the second account, to instruct the CHIP device to release the established binding relationship, i.e., the first binding relationship and to establish a second binding relationship with the second account.

Alternatively, the first account and the second account are accounts on different platforms. Alternatively, the first account and the second account are accounts on a same platform.

Alternatively, in the first scenario, the second configuration device receives an original account release success notification from the CHIP device, the original account release success notification indicates that the CHIP device has completed the release of the first binding relationship, and the second configuration device performs device attestation with the CHIP device when receiving the original account release notification.

As illustrated in FIG. 8, a possible processing flow of the control method according to an embodiment of the disclosure includes the following operations.

S801, a server receives an original binding relationship deletion request.

S802, the server deletes a first binding relationship between a CHIP device and a first account.

The server deletes the first binding relationship between the CHIP device and the first account when receiving the original binding relationship deletion request.

The CHIP device meets an original binding relationship release condition in a case that the first binding relationship has established with the first account, then the CHIP device releases the first binding relationship and establishes a second binding relationship with a second account, to enable a second configuration device which uses the second account to configure the CHIP device.

The server is a first server on which a first platform to which the first account belongs is run.

Alternatively, the first account and the second account are accounts on different platforms. In this case, the first account is an account on the first platform, the second account is an account on the second platform, and the first server on which the first platform is run and the second server on which the second account is run are different servers.

Alternatively, the first account and the second account are accounts on a same platform. In this case, the first account is an account on the first platform, the second account is an account on the second platform, and the first server on which the first platform is run and the second server on which the second account is run are a same server.

The CHIP device deletes the stored first binding relationship and instructs the first configuration device and/or the first platform to release the first binding relationship during the release of the first binding relationship.

Alternatively, the operation that the CHIP device instructs the first configuration device to release the first binding relationship includes an operation that the CHIP device sends the original binding relationship release request to the server. In this case, the server receives the original binding relationship release request from the CHIP device. The server forwards the original binding relationship release request to the first configuration device which uses the first account, to instruct the first configuration device to release the stored first binding relationship.

Alternatively, the operation that CHIP device instructs the first configuration device to release the stored first binding relationship includes the following instruction manners.

A first instruction manner: the CHIP device sends the original binding relationship release request to the first configuration device.

A second instruction manner: the CHIP device sends the original binding relationship release request to the server, and the server forwards the received original binding relationship release request to the first configuration device.

The first configuration device releases the stored first binding relationship when being requested by the original binding relationship release request received from a CHIP device or the server. After releasing the stored first binding relationship, the first configuration device sends an original binding relationship deletion request to the server, and the server receives the original binding relationship deletion request from the first configuration device.

The server sends an original binding relationship release success response after completing the first binding relationship deletion request. In an example in which the first instruction manner is used, the server sends the original binding relationship release success response to the first configuration device, and the first configuration device forwards the received original binding relationship release success response to the CHIP device, to indicate that the server and the first configuration device have completed the deletion or release of the first binding relationship. In an example in which the second instruction manner is used, the server sends the original binding relationship release success response to the CHIP device, to indicate that the server and the first configuration device have completed the deletion or release of the first binding relationship.

The control method provided in the embodiment of the disclosure includes an operation that responsive to that a CHIP device is configured with a network by a second configuration device in a case that the CHIP device has established a first binding relationship with a first account, the CHIP device releases the first binding relationship and establishes a second binding relationship with a second account, to enable the second configuration device which uses the second account to configure the CHIP device. In this case, when the CHIP device is configured with a network by another configuration device in a case that the CHIP device has established a binding relationship, the CHIP device deletes the original binding relationship and instructs the original configuration device and the original server to release the original binding relationship. In addition, the CHIP device establishes a binding relationship with a new configuration device when the original binding relationship is released respectively from the CHIP device, the original configuration device and the server. Therefore, the restriction that the CHIP is only configured by one configuration device can be lifted since the new configuration device is able to configure the CHIP device.

Hereinafter, embodiments of the disclosure take the configuration device as a mobile phone and the CHIP device as a CHIP device as an example, the proposed control method are described through different application scenarios.

### A first example

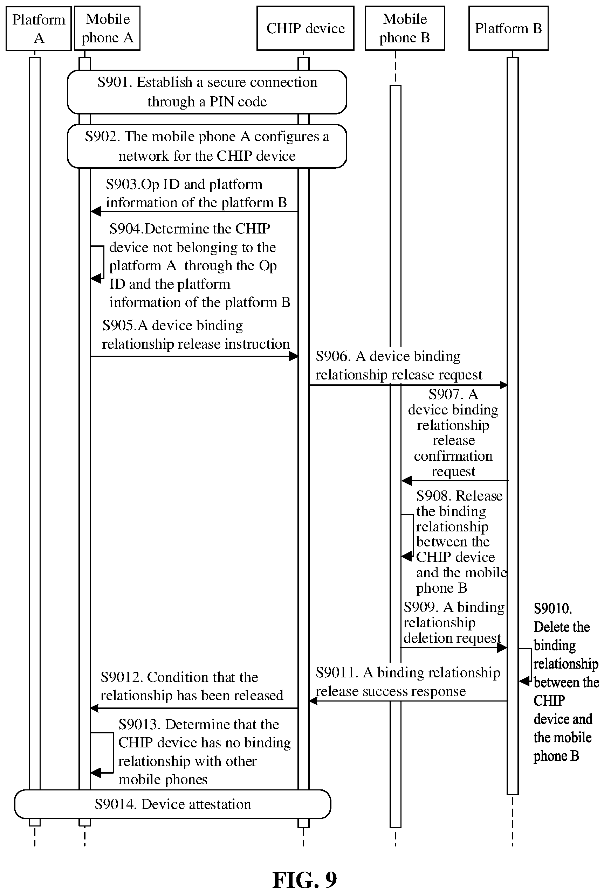

An account A of a mobile phone A is an account on a platform A. An account B of a mobile phone B is an account on a platform B. In this example, the CHIP device has established a binding relationship with the account B, and stored thereon information such as an Op ID configured by the platform B for the CHIP device and platform information of the platform B. The operation that the CHIP device releases a binding relationship with the account B is illustrated in FIG. 9 and includes the following operations.

S901, the CHIP device establishes a secure connection with the mobile phone A through a PIN code.

S902, the mobile phone A configures a network for the CHIP device.

The mobile phone A wishes the CHIP device to connect with the platform A and reconfigures the network for the CHIP device.

S903, the CHIP device sends the Op ID and the platform information of the platform B to the mobile phone A.

The CHIP device sends the Op ID and the platform information of the platform B to the mobile phone A after connecting with the network.

S904, the mobile phone A determines that the CHIP device does not belong to the platform A through the Op ID and the platform information of the platform B.

S905, the mobile phone A sends a device binding relationship release instruction to the CHIP device.

Herein, the device binding relationship release instruction may also be called an original binding relationship release instruction.

S906, the CHIP device sends a device binding relationship release request to the platform B.

S907, the platform B sends a device binding relationship release confirmation request to the mobile phone B.

Herein, the device binding relationship release confirmation request may also be called an original binding relationship release request.

S908, the mobile phone B releases the binding relationship between the CHIP device and the mobile phone B.

The mobile phone B is authorized and determines to release the binding relationship between the CHIP device and the mobile phone B after receiving the device binding relationship release request from the platform B.

S909, the mobile phone B sends a binding relationship deletion request to the platform B.

The binding relationship deletion request may also be called an original binding relationship deletion request.

S9010, the platform B deletes the binding relationship between the CHIP device and the mobile phone B.

S9011, the platform B returns a binding relationship release success response to the CHIP device.

S9012, the CHIP device sends a condition that the relationship between the CHIP device and the platform B has been released to the mobile phone A.

Herein, the sent condition may be carried in an original binding relationship release success notification.

S9013, the mobile phone A determines that the CHIP device has no binding relationship with other mobile phones.

S9014, the platform A and the CHIP device perform device attestation.

Herein, the binding relationship between the CHIP device and the account A is established during the device attestation between the platform A and the CHIP device.

### A second example

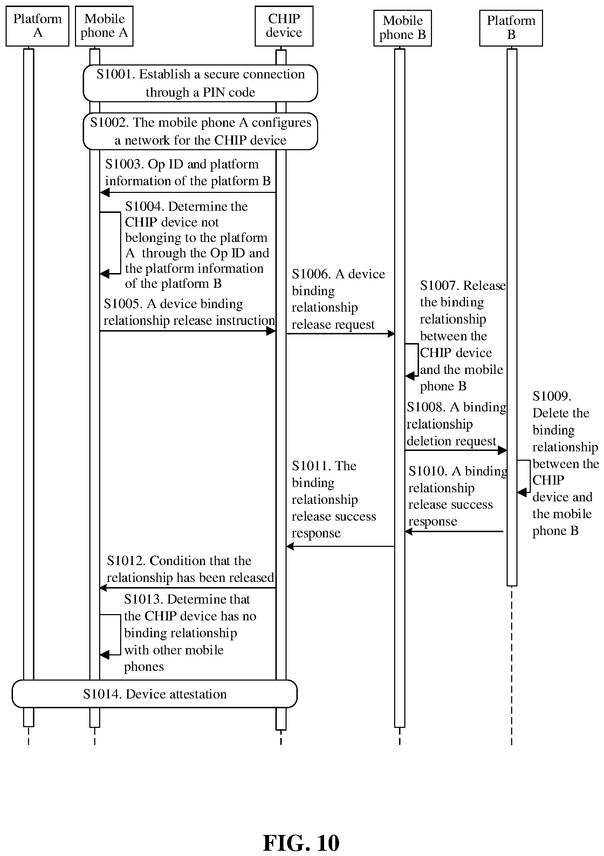

An account A of a mobile phone A is an account on a platform A. An account B of a mobile phone B is an account on a platform B. In this example, the CHIP device has established a binding relationship with the account B, and stored thereon information such as an Op ID configured by the platform B for the CHIP device and platform information of the platform B. The operation that the CHIP device releases the binding relationship with the account B is illustrated in FIG. 10 and includes the following operations.

S1001, a CHIP device establishes a secure connection with a mobile phone A through a PIN code.

S1002, the mobile phone A configures a network for the CHIP device.

The mobile phone A wishes the CHIP device to connect with the platform A and reconfigures the network for the CHIP device.

S1003, the CHIP device sends the Op ID and the platform information of a platform B to the mobile phone A.

The CHIP device sends the Op ID and the platform information of the platform B to the mobile phone A after connecting with the network.

S1004, the mobile phone A determines that the CHIP device does not belong to the platform A through the Op ID and the platform information of the platform B.

S1005, the mobile phone A sends a device binding relationship release instruction to the CHIP device.

The original binding relationship release instruction is used for instructing the CHIP device to release the binding relationship between the CHIP device and the account B.

S1006, the CHIP device sends a device binding relationship release request to the mobile phone B.

S1007, the mobile phone B releases the binding relationship between the CHIP device and the mobile phone B.

The mobile phone B is authorized and determines to release the binding relationship between the CHIP device and the mobile phone B after receiving the binding relationship release request from the CHIP device.

S1008, the mobile phone B sends a binding relationship deletion request to the platform B.

S1009, the platform B deletes the binding relationship between the CHIP device and the mobile phone B.

S1010, the platform B returns a binding relationship release success response to the mobile phone B.

S1011, the mobile phone B returns a binding relationship release success response to the CHIP device.

S1012, the CHIP device sends a condition that the relationship between the CHIP device and the platform B has been released to the mobile phone A.

S1013, mobile phone A determines that the CHIP device has no binding relationship with other mobile phones.

S1014, the platform A performs device attestation with the CHIP device.

Herein, the platform A establishes a binding relationship between the CHIP device and the account A during the attestation with the CHIP device.

### A third example

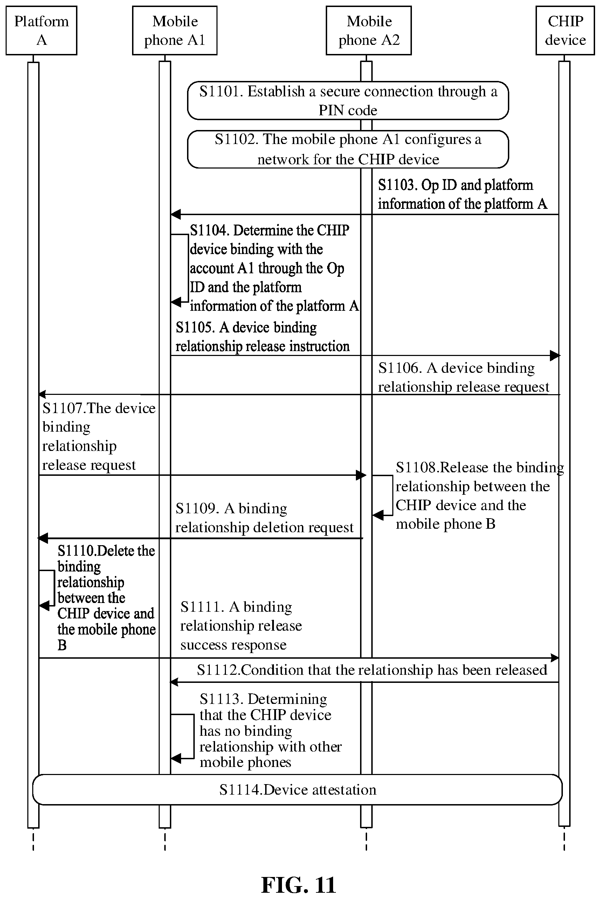

An account A1 of a mobile phone A1 and an account A2 of a mobile phone A2 are accounts on a platform A. In this example, the CHIP device has established a binding relationship with the account A2, and has stored information such as an Op ID configured by the platform A for the CHIP device and platform information of the platform A. The operation that the CHIP device releases the binding relationship with the account A2 is illustrated in FIG. 11 and includes the following operations.

S1101, a CHIP device establishes a secure connection with a mobile phone A1 through a PIN code.

S1102, the mobile phone A1 configures a network for the CHIP device.

The mobile phone A1 wishes the CHIP device to bind with the account A1 and reconfigures the network for the CHIP device.

S1103, the CHIP device sends an Op ID and platform information of a platform A to the mobile phone A1.

The CHIP device sends the Op ID and the platform information of the platform A to the mobile phone A1 after connecting with the network.

S1104, the mobile phone A1 determines that the CHIP device has bound with the account A1 through the Op ID and the platform information of the platform A.

S1105, the mobile phone A1 sends a device binding relationship release instruction to the CHIP device.

The original binding relationship release instruction is used for instructing the CHIP device to release the binding relationship between the CHIP device and an account A2.

S1106, the CHIP device sends a device binding relationship release request to the platform A.

S1107, the platform A sends a device binding relationship release confirmation request to a mobile phone A2.

S1108, the mobile phone A2 releases the binding relationship between the CHIP device and the mobile phone A2.

The mobile phone A2 is authorized and determines to release the binding relationship between the CHIP device and the mobile phone A2 after receiving the binding relationship release request from the platform A.

S1109, the mobile phone A2 sends a binding relationship deletion request to the platform A.

S1110, the platform A deletes the binding relationship between the CHIP device and the mobile phone A2.

S1111, the platform A returns a binding relationship release success response to the CHIP device.

S1112, the CHIP device sends a condition that the relationship between the CHIP device and the account A2 has been released to the mobile phone A1.

S1113, the mobile phone A1 determines that the CHIP device has no binding relationship with other mobile phones.

S1114, the mobile phone A1 performs attestation with the CHIP device.

Herein, the mobile phone A1 establishes a binding relationship between the CHIP device and the account A1 during the attestation with the CHIP device.

### A fourth example

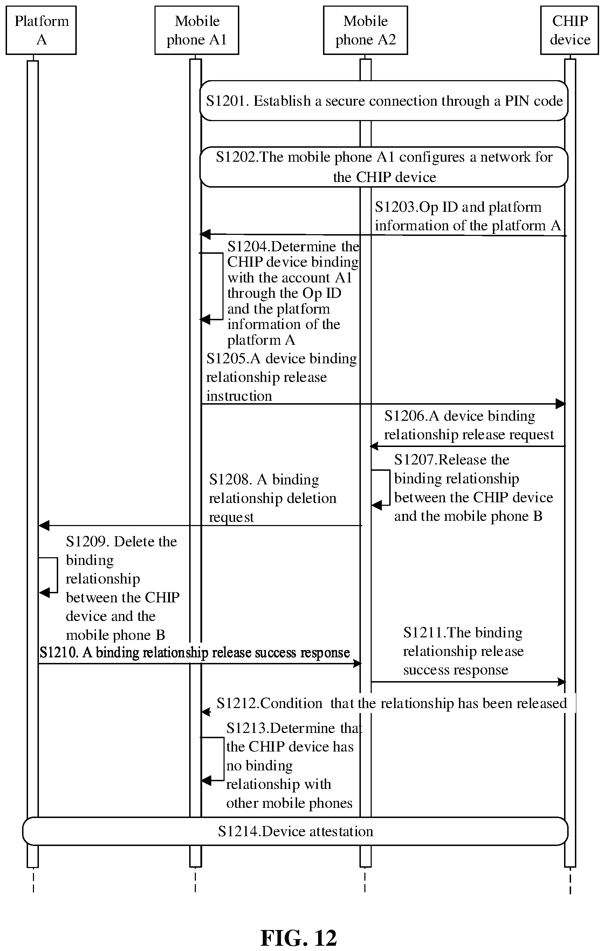

An account A1 of a mobile phone A1 and an account A2 of a mobile phone A2 are accounts on a platform A. In this example, the CHIP device has established a binding relationship with the account A2, and stored information such as an Op ID configured by the platform A for the CHIP device and platform information of the platform A. The operation that the CHIP device releases the binding relationship with the account A2 is illustrated in FIG. 12 and includes the following operations.

S1201, a CHIP device establishes a secure connection with a mobile phone A1 through a PIN code.

S1202, the mobile phone A1 configures a network for the CHIP device.

The mobile phone A1 wishes the CHIP device to bind with the account A1 and reconfigures the network for the CHIP device.

S1203, the CHIP device sends an Op ID and platform information of the platform A to the mobile phone A1.

The CHIP device sends the Op ID and the platform information of the platform A to the mobile phone A1 after connecting with the network.

S1204, the mobile phone A1 determines that the CHIP device has bound with the account A1 through the Op ID and the platform information of the platform B.

S1205, the mobile phone A1 sends a device binding relationship release instruction to the CHIP device.

The original binding relationship release instruction is used for instructing the CHIP device to release the binding relationship between the CHIP device and the account A2.

S1206, the CHIP device sends a device binding relationship release request to the mobile phone A1.

S1207, the mobile phone A1 releases the binding relationship between the CHIP device and the mobile phone A2.

The mobile phone A2 is authorized and determines to release the binding relationship between the CHIP device and the mobile phone A2 after receiving the binding relationship release request from the CHIP device.

S1208, the mobile phone A2 sends a binding relationship deletion request to the platform A.

S1209, the platform A deletes the binding relationship between the CHIP device and the mobile phone A2.

S1210, the platform A returns a binding relationship release success response to the mobile phone A2.

S1211, the mobile phone A2 returns the binding relationship release success response to the CHIP device.

S1212, the CHIP device sends a condition that the relationship between the CHIP device and the account A2 has been released to the mobile phone A.

S1213, the mobile phone A1 determines that the CHIP device has no binding relationship with other mobile phones.

S1214, the mobile phone A1 performs attestation with the CHIP device.

Herein, the mobile phone A1 establishes a binding relationship between the CHIP device and the account A1 during the attestation with the CHIP device.

### A fifth example

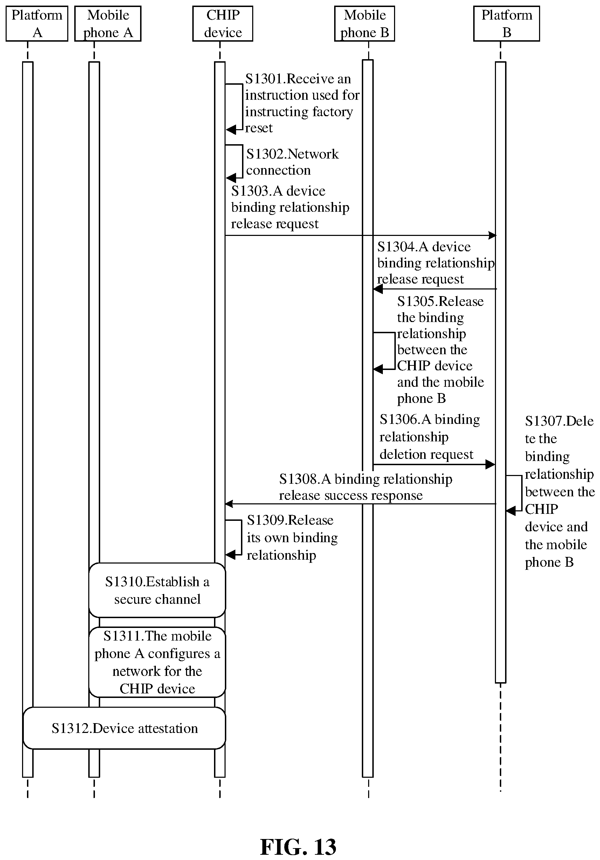

An account A used by a mobile phone A is an account on a platform A. An account B used by a mobile phone B is an account on a platform B. In this example, the CHIP device has established a binding relationship with the account B, and has stored information such as an Op ID configured by the platform B for the CHIP device and platform information of the platform B. The operation that the CHIP device releases the binding relationship with the account B is illustrated in FIG. 13 and includes the following operations.

S1301, a CHIP device receives an instruction used for instructing factory reset.

S 1302, the CHIP device connects to a network.

S1303, the CHIP device sends a device binding relationship release request to a platform B.

S1304, the platform B sends a device binding relationship release confirmation request to the mobile phone B.

S1305, the mobile phone B releases a binding relationship between the CHIP device and the mobile phone B.

The mobile phone B is authorized and determines to release the binding relationship between the CHIP device and the mobile phone B after receiving the binding relationship release request from the platform B.

S1306, the mobile phone B sends a binding relationship deletion request to the platform B.

The binding relationship deletion request is used for instructing the platform B to delete the binding relationship between the CHIP device and the mobile phone B.

S1307, the platform B deletes the binding relationship between the CHIP device and the mobile phone B.

S1308, the platform B returns a binding relationship release success response to the CHIP device.

S1309, the CHIP device releases its own binding relationship.

S1310, a mobile phone A establishes a secure channel with the CHIP device.

S1311, the mobile phone A configures a network for the CHIP device.

S 1312, a platform A performs device attestation with the CHIP device.

### A sixth example

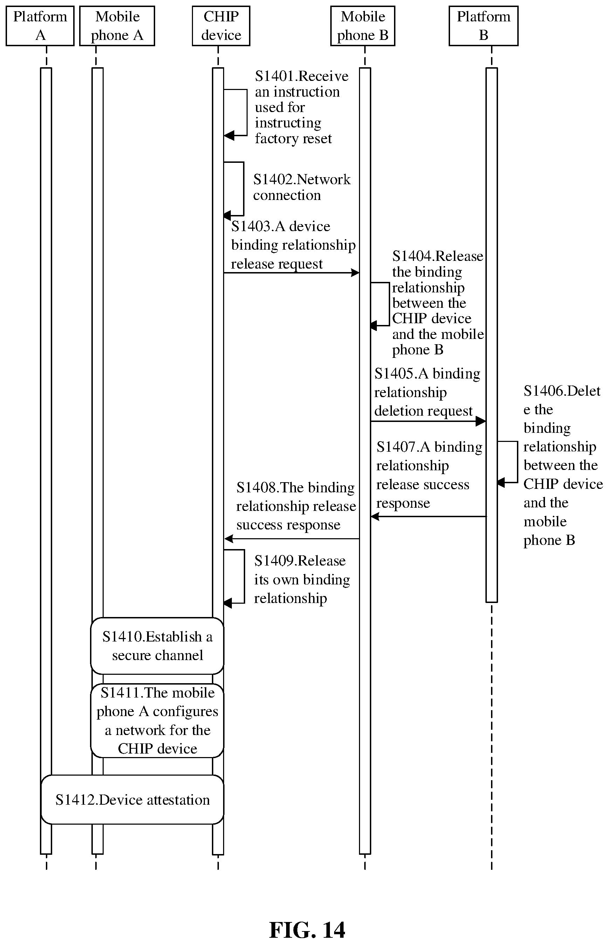

An account A used by a mobile phone A is an account on a platform A. An account B used by a mobile phone B is an account on a platform B. In this example, the CHIP device has established a binding relationship with the account B, and has stored information such as an Op ID configured by the platform B for the CHIP device and platform information of the platform B. The operation that the CHIP device releases the binding relationship with the account B is illustrated in FIG. 14 and includes the following operations.

S1401, a CHIP device receives an instruction used for instructing factory reset.

S1402, the CHIP device connects to a network.

S1403, the CHIP device sends a device binding relationship release request to a mobile phone B.

S1404, the mobile phone B releases the binding relationship between the CHIP device and the mobile phone B.

The mobile phone B is authorized and releases the binding relationship between the CHIP device and the mobile phone B after receiving the binding relationship release request from the platform B.

S1405, the mobile phone B sends a binding relationship deletion request to a platform B.

The binding relationship deletion request is used for instructing the platform B to delete the binding relationship between the CHIP device and the mobile phone B.

S1406, the platform B deletes the binding relationship between the CHIP device and the mobile phone B.

S1407, the platform B returns a binding relationship release success response to the mobile phone B.

S1408, the mobile phone B returns a binding relationship release success response to the CHIP device.

S1409, the CHIP device releases its own binding relationship.

S1410, a mobile phone A establishes a secure channel with the CHIP device.

S1411, the mobile phone A configures a network for the CHIP device.

S 1412, a platform A performs device attestation with the CHIP device.

The CHIP device may only be configured by the configuration device which uses the account bound with the CHIP device. The CHIP device cannot establish a binding relationship with another account when the CHIP device has established a binding relationship. According to the control method proposed by the embodiments of the disclosure, when the CHIP device needs to establish a new binding relationship with another binding relationship in a case that the CHIP device has established a binding relationship, the CHIP releases the established binding relationship. In addition, the binding relationship stored in the original configuration device is released and the binding relationship in the original platform is deleted, to completely delete the original binding relationship from the IoT system, to avoid the problem of invalid occupation of account resources in the configuration device and the original platform caused by merely releasing the original binding relationship in the CHIP device, and to release the operator resources.

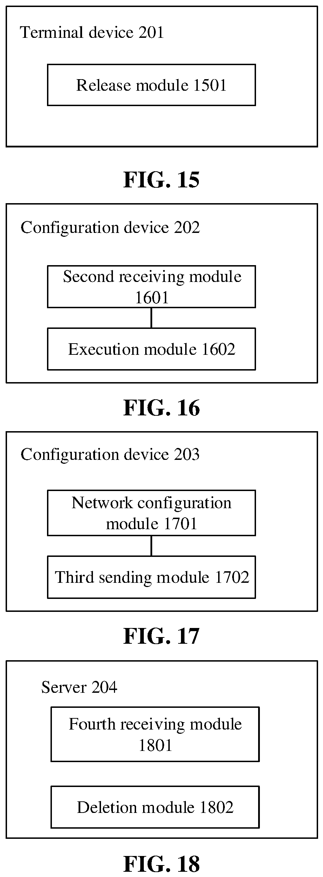

In order to implement the above control method, an embodiment of the disclosure also provides a CHIP device 201, as illustrated in FIG. 15, the CHIP device 201 includes a release module 1501.

The release module 1501 is configured to: responsive to that an original binding relationship release condition is met in a case that a first binding relationship has established with a first account, release the first binding relationship and establish a second binding relationship with a second account, to enable a second configuration device, which uses the second account, to configure the CHIP device.

In an embodiment of the disclosure, the release module 1501 is further configured to determine that the original binding relationship release condition is met when detecting at least one of :

Network configuration by a second configuration device being completed; or

An instruction used for instructing factory reset being received.

In an embodiment of the disclosure, the first account and the second account are accounts on different platforms.

In an embodiment of the disclosure, the first account and the second account are accounts on a same platform.

In an embodiment of the invention, the CHIP device further includes a first sending module and a first receiving module.

The first sending module is configured to send identification information and/or platform information to the second configuration device.

The first receiving module is configured to receive an original binding relationship release instruction from the second configuration device.

In an embodiment of the disclosure, the release module 1501 is further configured to: send an original binding relationship release request to a first server, where a first platform to which the first account belongs is run on the first server; and receive an original binding relationship release success response from the first server.

In an embodiment of the disclosure, the release module 1501 is further configured to: send an original binding relationship release request to a first configuration device which uses the first account; and receive an original binding relationship release success response from the first configuration device.

In an embodiment of the disclosure, the release module 1501 is further configured to: send an original binding relationship release success notification to the second configuration device.

An embodiment of the disclosure provides a CHIP device including a processor and a memory for storing a computer program capable of being run on the processor. The processor is configured to execute operations of the above control method performed by the CHIP device when running the computer program.

In order to implement the above control method, an embodiment of the disclosure also provides a configuration device 202, as illustrated in FIG. 16, the configuration device 202 includes a second receiving module 1601 and an execution module 1602.

The second receiving module 1601 is configured to receive an original binding relationship release request used for instructing release of a first binding relationship. The first binding relationship is a binding relationship between a CHIP device and a first account used by a first configuration device.

The execution module 1602 is configured to release the first binding relationship stored in the configuration device, to enable the CHIP device to establish a second binding relationship with a second account, and to enable a second configuration device which uses the second account to configure the CHIP device.

In an embodiment of the disclosure, the configuration device 202 further includes a second sending module.

The second sending module is configured to send an original binding relationship deletion request to a first server to which the first account belongs. A first platform to which the first account belongs is run on the first server.

In an embodiment of the disclosure, the original binding relationship release request is received from the CHIP device or a first server.

In an embodiment of the disclosure, the first account and the second account are accounts on different platforms.

In an embodiment of the disclosure, the first account and the second account are accounts on a same platform.

An embodiment of the disclosure provides a configuration device, the configuration device includes a processor and a memory for storing a computer program capable of being run on the processor. The processor is configured to execute operations of the above control method performed by the configuration device when running the computer program.

In order to implement the above control method, an embodiment of the disclosure also provides a configuration device 203, as illustrated in FIG. 17, the configuration device 203 includes a network configuration module 1701 and a third sending module 1702.

The network configuration module 1701 is configured to configure a network for a CHIP device.

The third sending module 1702 is configured to send an original binding relationship release instruction to the CHIP device in a case of determining that the CHIP device has established a first binding relationship with a first account. The original binding relationship release instruction is used for instructing the CHIP device to release the first binding relationship and establish a second binding relationship with a second account used by the second configuration device, to enable the second configuration device to configure the CHIP device.

In an embodiment of the disclosure, the configuration device 203 further includes a third receiving module.

The third receiving module is configured to receive identification information and/or platform information from the CHIP device. The identification information and the platform information are used for determining whether the CHIP device has established the first binding relationship.

In an embodiment of the disclosure, the first account and the second account are accounts on different platforms.

In an embodiment of the disclosure, the first account and the second account are accounts on a same platform.

An embodiment of the disclosure provides a configuration device. The configuration device includes a processor and a memory for storing a computer program capable of being run on the processor. The processor is configured to execute operations of the above control method performed by the second configuration device when running the computer program.

In order to implement the above control method, an embodiment of the disclosure also provides a server 204, as illustrated in FIG. 18, the server 204 includes a fourth receiving module 1801 and a deletion module 1802.

The fourth receiving module 1801 is configured to receive an original binding relationship deletion request.

The deletion module 1802 is configured to delete a first binding relationship between a CHIP device and a first account. Responsive to that the CHIP device meets an original binding relationship release condition in a case that the CHIP device has established the first binding relationship, the CHIP device releases the first binding relationship and establishes a second binding relationship with a second account, to enable a second configuration device which uses the second account to configure the terminal device.

In an embodiment of the disclosure, the server 204 further includes a fifth receiving module.

The fifth receiving module is configured to receive the original binding relationship deletion request from the first configuration device.

In an embodiment of the disclosure, the server 204 further includes a sixth receiving module and a fourth sending module.

The sixth receiving module is configured to receive an original binding relationship release request from the CHIP device.

The fourth sending module is configured to forward the original binding relationship release request to a first configuration device which uses the first account.

In an embodiment of the disclosure, the first account and the second account are accounts on different platforms.

In an embodiment of the disclosure, the first account and the second account are accounts on a same platform.

An embodiment of the disclosure provides a configuration device. The configuration device includes a processor and a memory for storing a computer program capable of being run on the processor. The processor is configured to execute operations of the above control method performed by the server when running the computer program.

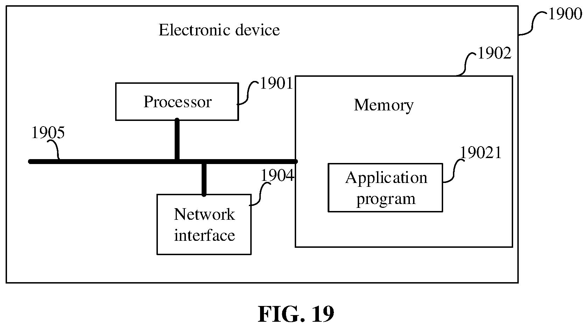

FIG. 19 is a structural diagram of a hardware composition of an electronic device (a CHIP device, a configuration device or a server) according to an embodiment of the disclosure. An electronic device 1900 includes at least one processor 1901, a memory 1902 and at least one network interface 1904.

Various components in the electronic device 1900 are coupled with each other through a bus system 1905. It is understood that the bus system 1905 is used for connecting communication between these components. The bus system 1905 includes a data bus as well as a power bus, a control bus and a status signal bus. However, for the sake of clarity, various buses are labeled as the bus system 1905 in FIG. 19.

It can be understood that, the memory 1902 may be a volatile memory or a non-volatile memory, and may include both the volatile memory and the non-volatile memory. The The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an Optical Disk, or a Compact Disc ROM (CD-ROM). The magnetic surface memory may be a magnetic disk memory or a magnetic tape memory. The volatile memory may be a Random Access Memory (RAM) which is used as an external cache. Many forms of RAM may be used through exemplary but not limitative description, for example, a Static RAM (SRAM), a Synchronous Static RAM (SSRAM), a Dynamic RAM (DRAM), a Synchronous DDRAM (SDRAM), a Double Data Rate SDRAM (DDRSDRAM), an Enhanced SDRAM (ESDRAM), a SyncLink DRAM (SLDRAM) and a Direct Rambus RAM (DR RAM). The memory 1902 in the embodiments of the disclosure aims to include but be not limited to these memories and any other suitable types of memories.

The memory 1902 in the embodiment of the disclosure is configured to store various types of data to support the operation of the electronic device 1900. Examples of such data include any computer program for operating on the electronic device 1900, for example, an application program 19021 that includes a program for implementing the method of embodiments of the disclosure.

The method disclosed in the above embodiments of the disclosure may be applied to or implemented by the processor 1901. The processor 1901 may be an integrated circuit chip and has a signal processing capability. During implementation, the steps of the foregoing method may be implemented by using a hardware integrated logic circuit in the processor 1901 or implemented by using instructions in a software form. The foregoing processor 1901 may be a general purpose processor, a Digital Signal Processor (DSP), or another programmable logical device, discrete gate or transistor logical device, or discrete hardware component. The processor 1901 may implement or perform methods, steps and logical block diagrams disclosed in the embodiments of the disclosure. The general purpose processor may be a microprocessor or any conventional processor and the like. Steps of the methods disclosed with reference to the embodiments of the disclosure may be directly executed and completed by means of a hardware decoding processor, or by using a combination of hardware and software modules in the decoding processor. The software module may be located in a storage medium, and the storage medium is located in the memory 1902, and the processor 1901 reads information in the memory 1902 and completes the steps in the foregoing methods in combination with hardware of the processor.

In an exemplary embodiment, the electronic device 1900 may be implemented by one or more Application Specific Integrated Circuits (ASICs), DSPs, Programmable Logic Devices (PLDs), Complex PLDs (CPLDs), FPGAs, general purpose processors, controllers, Micro Controller Units (MCUs), Micro Processing Units (MPUs), or other electronic components, for performing the foregoing methods.

An embodiment of the disclosure also provides a storage medium configured to store a computer program.

Alternatively, the storage medium may be applied to a CHIP device in embodiments of the disclosure, and the computer program causes a computer to perform respective processes in various methods of the embodiments of the disclosure. For brevity, details are not described herein again.

Alternatively, the storage medium may be applied to a configuration device in embodiments of the disclosure, and the computer program causes a computer to perform respective processes in various methods of the embodiments of the disclosure. For brevity, details are not described herein again.

Alternatively, the storage medium may be applied to a server in embodiments of the disclosure, and the computer program causes a computer to perform respective processes in various methods of the embodiments of the disclosure. For brevity, details are not described herein again.

The present disclosure are described herein with reference to flow charts and/or block diagrams of methods, devices (systems), and computer program products in accordance with embodiments of the present disclosure. It is understood that the computer program instructions may implement each flow and/or block in the flow charts and/or the block diagrams, and combinations of flows and/or blocks in the flow charts and/or block diagrams. These computer program instructions may be provided to a processor of a general purpose computer, a special purpose computer, an embedded processor or other programmable data processing devices, to generate a machine which enable the instructions executed by the processor of a computer or other programmable data processing devices to generate an apparatus for performing functions specified in one or more flows in the flow charts and/or one or more blocks in the block diagrams.

These computer program instructions may also be stored in a computer-readable memory which can direct a computer or other programmable data processing devices to operate in a specific manner, to enable the instructions stored in the computer-readable memory to generate a manufacture including instruction apparatus for performing functions specified in one or more flows in the flow charts and/or one or more blocks in the block diagrams.

These computer program instructions may also be loaded onto a computer or other programmable data processing devices, such that a series of operational steps are executed on the computer or other programmable devices to generate computer-implemented processes. Therefore, the instructions executed on the computer or other programmable devices provide steps for implementing the functions specified in one or more flows in the flow charts and/or one or more blocks in the block diagrams.

What are described above are merely better embodiments of the disclosure, and are not to limit the protection scope of the disclosure, and any modification, equivalent and improvement within the spirit and principles in the disclosure shall be covered in the protective scope of the disclosure.

## Claims

1. A control method, comprising:
responsive to that a Connected Home Over Internet Protocol (CHIP) device meets an original binding relationship release condition in a case that the CHIP device has established a first binding relationship with a first account, releasing, by the CHIP device, the first binding relationship and establishing a second binding relationship with a second account, to enable a second configuration device, which uses the second account, to configure the CHIP device.

2. The method of claim 1, wherein the CHIP device meets the original binding relationship release condition when detecting at least one of:
network configuration by the second configuration device being completed; or
an instruction used for instructing factory reset being received.

3. The method of claim 1 or 2, wherein the first account and the second account are accounts on different platforms.

4. The method of claim 1 or 2, wherein the first account and the second account are accounts on a same platform.

5. The method of claim 2, further comprising: in a case that a network is configured by the second configuration device,
sending, by the CHIP device to the second configuration device, at least one of identification information or platform information;
receiving, by the CHIP device, an original binding relationship release instruction from the second configuration device.

6. The method of any one of claims 1 to 5, wherein releasing the first binding relationship comprises:
sending an original binding relationship release request to a first server, wherein a first platform to which the first account belongs is run on the first server; and
receiving an original binding relationship release success response from the first server.

7. The method of any one of claims 1 to 5, wherein releasing the first binding relationship comprises:
sending an original binding relationship release request to a first configuration device which uses the first account; and
receiving an original binding relationship release success response from the first configuration device.

8. The method of claim 6 or 7, wherein releasing the first binding relationship in a case that a network is configured by the second configuration device further comprises:
sending an original binding relationship release success notification to the second configuration device.

9. A control method, comprising:
receiving, by a first configuration device, an original binding relationship release request used for instructing release of a first binding relationship, wherein the first binding relationship is a binding relationship between a Connected Home Over Internet Protocol (CHIP) device and a first account used by the first configuration device; and
releasing, by the first configuration device, the first binding relationship stored in the first configuration device, to enable the CHIP device to establish a second binding relationship with a second account, and to enable a second configuration device which uses the second account to configure the CHIP device.

10. The method of claim 9, further comprising:
sending, by the first configuration device, an original binding relationship deletion request to a first server, wherein a first platform to which the first account belongs is run on the first server.

11. The method of claim 9 or 10, wherein the original binding relationship release request is received from the CHIP device or a first server.

12. The method of claim 9 or 10, wherein the first account and the second account are accounts on different platforms.

13. The method of claim 9 or 10, wherein the first account and the second account are accounts on a same platform.

14. A control method, comprising:
configuring, by a second configuration device, a network for a Connected Home Over Internet Protocol (CHIP) device; and
sending, by the second configuration device in a case of determining that the CHIP device has established a first binding relationship with a first account, an original binding relationship release instruction to the CHIP device, wherein the original binding relationship release instruction is used for instructing the CHIP device to release the first binding relationship and establish a second binding relationship with a second account used by the second configuration device, to enable the second configuration device to configure the CHIP device.

15. The method of claim 14, further comprising:
receiving, by the second configuration device from the CHIP device, at least one of identification information or platform information.

16. The method of claim 14 or 15, wherein the first account and the second account are accounts on different platforms.

17. The method of claim 14 or 15, wherein the first account and the second account are accounts on a same platform.

18. A control method, comprising:
receiving, by a server, an original binding relationship deletion request; and
deleting, by the server, a first binding relationship between a Connected Home Over Internet Protocol (CHIP) device and a first account, wherein responsive to that the terminal device meets an original binding relationship release condition in a case that the terminal device has established the first binding relationship, the terminal device releases the first binding relationship and establishes a second binding relationship with a second account , to enable a second configuration device, which uses the second account, to configure the terminal device.

19. The method of claim 18, further comprising:
receiving, by the server, the original binding relationship deletion request from a first configuration device.

20. The method of claim 18 or 19, further comprising:
receiving, by the server, an original binding relationship release request from the CHIP device; and
forwarding, by the server, the original binding relationship request to a first configuration device which uses the first account.

21. The method of any one of claims 18 to 20, wherein the first account and the second account are accounts on different platforms.

22. The method of any one of claims 18 to 20, wherein the first account and the second account are accounts on a same platform.

23. A Connected Home Over Internet Protocol (CHIP) device, comprising:
a release module, configured to: responsive to that an original binding relationship release condition is met in a case that a first binding relationship has established with a first account, release the first binding relationship and establish a second binding relationship with a second account, to enable a second configuration device, which uses the second account, to configure the CHIP device.

24. The CHIP device of claim 23, wherein the release module is configured to determine that the original binding relationship release condition is met when detecting at least one of:
network configuration by the second configuration device being completed; or
an instruction used for instructing factory reset being received.

25. The CHIP device of claim 23 or 24, wherein the first account and the second account are accounts on different platforms.

26. The CHIP device of claim 23 or 24, wherein the first account and the second account are accounts on a same platform.

27. The CHIP device of claim 24, further comprising:
a first sending module, configured to send at least one of identification information or platform information to the second configuration device; and
a first receiving module, configured to receive an original binding relationship release instruction from the second configuration device.

28. The CHIP device of any one of claims 23 to 27, wherein the release module is further configured to:
send an original binding relationship release request to a first server, wherein a first platform to which the first account belongs is run on the first server; and
receive an original binding relationship release success response from the first server.

29. The CHIP device of any one of claims 23 to 27, wherein the release module is further configured to:
send an original binding relationship release request to a first configuration device which uses the first account; and
receive an original binding relationship release success response from the first configuration device.

30. The CHIP device of claim 28 or 29, wherein the release module is further configured to:
send an original binding relationship release success notification to the second configuration device.

31. A configuration device, comprising:
a second receiving module, configured to receive an original binding relationship release request used for instructing release of a first binding relationship, wherein the first binding relationship is a binding relationship between a Connected Home Over Internet Protocol (CHIP) device and a first account used by the configuration device; and
an execution module, configured to release the first binding relationship stored in the configuration device, to enable the CHIP device to establish a second binding relationship with a second account, and to enable a second configuration device, which uses the second account, to configure the CHIP device.

32. The configuration device of claim 31, further comprising:
a second sending module, configured to send an original binding relationship deletion request to a first server, wherein a first platform to which the first account belongs is run on the first server.

33. The configuration device of claim 31 or 32, wherein the original binding relationship release request is received from the CHIP device or a first server.

34. The configuration device of claim 31 or 32, wherein the first account and the second account are accounts on different platforms.

35. The configuration device of claim 31 or 32, wherein the first account and the second account are accounts on a same platform.

36. A configuration device, comprising:
a network configuration module, configured to configure a network for a Connected Home Over Internet Protocol (CHIP) device; and
a third sending module, configured to send an original binding relationship release instruction to the CHIP device in a case of determining that the CHIP device has established a first binding relationship with a first account, wherein the original binding relationship release instruction is used for instructing the CHIP device to release the first binding relationship and establish a second binding relationship with a second account used by the second configuration device, to enable the second configuration device to configure the CHIP device.

37. The configuration device of claim 36, further comprising:
a third receiving module, configured to receive at least one of identification information or platform information from the CHIP device.

38. The configuration device of claim 36 or 37, wherein the first account and the second account are accounts on different platforms.

39. The configuration device of claim 36 or 37, wherein the first account and the second account are accounts on a same platform.

40. A server, comprising:
a fourth receiving module, configured to receive an original binding relationship deletion request; and
a deletion module, configured to delete a first binding relationship between a Connected Home Over Internet Protocol (CHIP) device and a first account, wherein responsive to that the terminal device meets an original binding relationship release condition in a case that the terminal device has established the first binding relationship, the CHIP releases the first binding relationship and establishes a second binding relationship with a second account, to enable a second configuration device, which uses the second account, to configure the terminal device.

41. The server of claim 40, further comprising:
a fifth receiving module, configured to receive the original binding relationship deletion request from a first configuration device.

42. The server of claim 40 or 41, further comprising:
a sixth receiving module, configured to receive an original binding relationship release request from the CHIP device; and
a fourth sending module, configured to forward the original binding relationship release request to a first configuration device which uses the first account.

43. The server of any one of claims 40 to 42, wherein the first account and the second account are accounts on different platforms.

44. The server of any one of claims 40 to 42, wherein the first account and the second account are accounts on a same platform.

45. A CHIP device, comprising a processor and a memory for storing a computer program capable of being run on the processor, wherein
the processor is configured to execute steps of the control method of any one of claims 1 to 8 when running the computer program.

46. A configuration device, comprising a processor and a memory for storing a computer program capable of being run on the processor, wherein
the processor is configured to execute steps of the control method of any one of claims 9 to 13 when running the computer program.

47. A configuration device, comprising a processor and a memory for storing a computer program capable of being run on the processor, wherein
the processor is configured to execute steps of the control method of any one of claims 14 to 17 when running the computer program.

48. A server, comprising a processor and a memory for storing a computer program capable of being run on the processor, wherein
the processor is configured to execute steps of the control method of any one of claims 18 to 22 when running the computer program.

49. A storage medium having stored thereon an executable program which, when being executed by a processor, cause the processor to implement the control method of any one of claims 1 to 8.

50. A storage medium having stored thereon an executable program which, when being executed by a processor, cause the processor to implement the control method of any one of claims 9 to 13.

51. A storage medium having stored thereon an executable program which, when being executed by a processor, cause the processor to implement the control method of any one of claims 14 to 17.

52. A storage medium having stored thereon an executable program which, when being executed by a processor, cause the processor to implement the control method of any one of claims 18 to 22.
